# EUROPEAN PATENT APPLICATION

(11) **EP 4 791 093 A1**
(43) Date of publication of application: **12.08.2026**
(21) Application number: 24876048.0
(22) Date of filing: 03.06.2024
(51) Int. Cl.: H04W 56/00

(54) **INFORMATION REPORTING METHOD, COMMUNICATION APPARATUS, AND STORAGE MEDIUM**

(30) Priority: 13.10.2023 CN 202311332944
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); LI, Lun, Shenzhen, Guangdong 518057 (CN); LIU, Wenfeng, Shenzhen, Guangdong 518057 (CN); XIAO, Huahua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/097051
(87) International publication number: WO 2025/077222

(57) **Abstract**

Provided in the present disclosure are an information reporting method, a communication apparatus, and a storage medium. The method comprises: receiving first configuration information sent by a second communication node, wherein the first configuration information is used for configuring a plurality of reference signal resources, and the plurality of reference signal resources at least comprise a first reference signal resource and a second reference signal resource; determining channel state information on the basis of the first configuration information, wherein the channel state information comprises a precoding matrix, the precoding matrix is determined on the basis of a first matrix and a second matrix, the first matrix is determined on the basis of the first reference signal resource, and the second matrix is determined on the basis of the second reference signal resource; and reporting the channel state information to the second communication node.

## Description

The present disclosure claims a priority to Chinese Patent Application No. 202311332944.4, and filed on October 13, 2023, the entire content of which is incorporated into the present application by reference.

### TECHNICAL FIELD

The present disclosure relates to the field of wireless communication technologies, and in particular, to an information reporting method, a communication apparatus, and a storage medium.

### BACKGROUND

In a wireless communication system, data transmission efficiency may be improved by using a multi-antenna transmission technology, thereby improving system performance. It can be understood that, compared with the technology using a single antenna panel, a larger number of antennas may be supported by using a plurality of antenna panels and data transmission efficiency may be improved. Further, by using a plurality of distributed antenna panels, an average transmission distance between a terminal and a base station may also be reduced, an average path loss may be reduced, and received average power may be improved effectively.

### SUMMARY

In an aspect, an information reporting method is provided, applied to a first communication node. The information reporting method includes:
receiving first configuration information sent from a second communication node, where the first configuration information is used for configuring a plurality of reference signal resources, the plurality of reference signal resources include at least a first reference signal resource and a second reference signal resource;
determining channel state information according to the first configuration information, where the channel state information includes a precoding matrix, the precoding matrix is determined according to a first matrix and a second matrix, the first matrix is determined according to the first reference signal resource, the second matrix is determined according to the second reference signal resource; and
reporting the channel state information to the second communication node.

In another aspect, an information reporting method is provided, applied to a second communication node. The information reporting method includes:
sending first configuration information to a first communication node, where the first configuration information is used for configuring a plurality of reference signal resources, the plurality of reference signal resources include at least a first reference signal resource and a second reference signal resource; and
receiving channel state information reported by the first communication node, where the channel state information includes a precoding matrix, the precoding matrix is determined according to a first matrix and a second matrix, the first matrix is determined according to the first reference signal resource, the second matrix is determined according to the second reference signal resource.

In yet another aspect, a reporting apparatus is provided, applied to a first communication node. The reporting apparatus includes:
a receiving module, configured to: receive first configuration information sent from a second communication node, where the first configuration information is used for configuring a plurality of reference signal resources, the plurality of reference signal resources include at least a first reference signal resource and a second reference signal resource;
a determining module, configured to: determine channel state information according to the first configuration information, where the channel state information includes a precoding matrix, the precoding matrix is determined according to a first matrix and a second matrix, the first matrix is determined according to the first reference signal resource, the second matrix is determined according to the second reference signal resource; and
a sending module, configured to: report the channel state information to the second communication node.

In yet another aspect, a reporting apparatus is provided, applied to a second communication node. The reporting apparatus includes:
a sending module, configured to: send first configuration information to a first communication node, where the first configuration information is used for configuring a plurality of reference signal resources, the plurality of reference signal resources include at least a first reference signal resource and a second reference signal resource; and
a receiving module, configured to: receive channel state information reported by the first communication node, where the channel state information includes a precoding matrix, the precoding matrix is determined according to a first matrix and a second matrix, the first matrix is determined according to the first reference signal resource, the second matrix is determined according to the second reference signal resource.

In yet another aspect, a communication apparatus is provided, and includes: a memory and a processor; the memory is coupled with the processor; the memory is configured to store a computer program; and the processor, upon executing the computer program, implements the information reporting method described in any one of the above aspects or embodiments.

In yet another aspect, a computer readable storage medium is provided and the computer readable storage medium has stored computer program instructions thereon, and the computer program instructions, when executed by a processor, implement the information reporting method described in any one of the above aspects or embodiments.

In yet another aspect, a computer program product is provided, the computer program product includes computer program instructions, and the computer program instructions, upon being executed by a processor, implement the information reporting method described in any one of the above aspects or embodiments.

### BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.
FIG. 1 is an architecture schematic diagram of a mobile communication network, provided by some embodiments of the present disclosure.
FIG. 2 is a structural schematic diagram of a base station, provided by some embodiments of the present disclosure.
FIG. 3 is a flow chart of an information reporting method, provided by some embodiments of the present disclosure.
FIG. 4 is a structural schematic diagram of a reporting apparatus, provided by some embodiments of the present disclosure.
FIG. 5 is a structural schematic diagram of another reporting apparatus, provided by some embodiments of the present disclosure.
FIG. 6 is a structural schematic diagram of a communication apparatus, provided by some embodiments of the present disclosure.

### DETAILED DESCRIPTION

The following will describe the technical solutions in the present disclosure clearly and completely, in conjunction with the drawings in the present disclosure, and obviously, the described embodiments are only a part of the embodiments of the present disclosure, not all of the embodiments. All other embodiments obtained based on the embodiments of the present disclosure by the ordinary skilled in the art without paying any creative effort, shall be included in the protection scope of the present disclosure.

It should be noted that in the present disclosure, the words such as "exemplary/exemplarily" or "for example", etc., are used to present an example, illustration, or explanation. Any embodiment or design scheme described with "exemplary/exemplarily" or "for example" in the present disclosure should not be construed as preferred or advantageous over other embodiments or design schemes. Rather, the usage of the words, such as "exemplary/exemplarily" or "for example", is intended to present relevant concepts in some manners.

Hereinafter, the terms "first", "second", etc., are used for descriptive purposes only, but are not to be construed as indicating or implying relative importance or implicitly indicating a number of indicated technical features. Thus, features defined with "first" or "second", etc., may explicitly or implicitly include one or more of the features. For example, "first" communication node, "second" communication node, "first" manner, "second" manner, "first" method, "second" method, "first" matrix, "second" matrix, "first" part, "second" part, etc., in the present disclosure are used only for descriptive differentiation unless otherwise specified, and do not represent an order or sequential order.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

First, some techniques related to the embodiments of the present disclosure are introduced:
1. Orthogonal frequency division multiplexing (Orthogonal Frequency Division Multiplexing, OFDM) technology: long term evolution (Long Term Evolution, LTE) technology and new radio (New Radio, NR) technology in the wireless communication technology are based on orthogonal frequency division multiplexing (Orthogonal Frequency Division Multiplexing, OFDM) technology. In the OFDM technology, a smallest frequency domain unit is a subcarrier, and a smallest time domain unit is an OFDM symbol. For convenient use of frequency-domain resources, a resource block (Resource Block, RB) is defined, where a resource block is defined as a specific number of consecutive subcarriers; a bandwidth block or bandwidth part (Bandwidth Part, BWP) is also defined, where a bandwidth block is defined as another specific number of consecutive resource blocks on a carrier. For convenient use of time-domain resources, a slot is defined, where a slot is defined as a specific number of consecutive OFDM symbols.
2. Channel estimation technology: in the wireless communication system, channel estimation may be performed before data transmission. A channel estimation process includes that: a base station sends a reference signal to a terminal; the terminal measures the reference signal, determines channel state information from the base station to the terminal, and reports the channel state information to the base station; the base station receives the channel state information reported by the terminal. The base station determines a strategy for data transmission according to a channel state represented by the received channel state information, and transmits data, thereby improving the efficiency of data transmission. It may be understood that, the accuracy of the channel state represented by the channel state information affects the strategy for transmission of the base station, thereby affecting the efficiency of data transmission.
3. Reference signal: a reference signal sent from the base station to the terminal is a downlink reference signal; in an LTE system, the downlink reference signal used for reporting the channel state information include: a cell-specific reference signal (Cell-specific Reference Signal, CRS) and a channel state information reference signal (Channel-State Information Reference Signal, CSI-RS); in an NR system, the downlink reference signal used for reporting the channel state information include: a channel state information reference signal (CSI-RS). The CSI-RS is carried by a channel state information reference signal resource (CSI-RS Resource), the CSI-RS resource consists of code division multiplexing (Code Division Multiplexing, CDM) groups, a CDM group consists of radio resource elements, and the CSI-RS of a group of CSI-RS ports is multiplexed in a code division multiplexing manner.
4. Channel state information: the channel state information transmitted between the base station and the terminal includes a channel quality indicator (Channel quality indicator, CQI) for indicating channel quality; or, the channel state information includes a precoding matrix indicator (Precoding Matrix Indicator, PMI) for indicating a precoding matrix applied to base station antennas.

There are two reporting formats for CQI. One is wideband CQI reporting, which reports a channel quality for a channel state information reporting band (CSI reporting band), the channel quality corresponds to the entire channel state information reporting band. The other is subband CQI reporting, and the subband CQI reporting refers to that channel state information reporting band respectively gives channel quality in unit of subbands, that is, reporting a channel quality for each subband of the channel state information reporting band.

The above subband is a frequency unit, defined as consecutive N RBs, where N is a positive integer; for ease of description, it is referred to as a channel quality indication subband, or CQI subband, or subband in the present disclosure. N is a size of the CQI subband, or referred to as a CQI subband size, or a subband size. The BWP is divided into subbands, and the channel state information reporting band is defined by a subset of the subbands of the BWP.

It should be noted that, the channel state information reporting band is the bands of which channel state information needs to be reported.

There are two manners to determine the channel quality information. one is determined according to the strength of the reference signal received by the terminal; the other is determined according to the signal to interference plus noise ratio of the received reference signal. On the channel state information reporting band, if the channel quality does not change much, reporting the CQI in a wideband CQI reporting manner may reduce resource overhead used for the CQI reporting; if the channel quality varies widely in the frequency domain, reporting the CQI in a subband CQI reporting manner may increase the accuracy of CQI reporting.

There are three reporting formats for PMI. One is wideband PMI reporting, which reports a PMI for the channel state information reporting band, and the PMI corresponds to the entire channel state information reporting band. Another is subband PMI reporting, which reports a PMI for each subband of the channel state information reporting band, or reports a component of a PMI for each subband of the channel state information reporting band. Exemplarily, assume that a PMI consists of X1 and X2, reporting the component of the PMI for each subband of the channel state information reporting band may be: reporting an X1 for the entire band, and reporting an X2 for each subband; or, reporting an X1 and an X2 for each subband.

Yet another reporting format of the PMI is that: the reported PMI indicates R precoding matrices for each sub-band, where R is a positive integer. In terms of the frequency-domain granularity for feeding back the precoding matrix, R also represents a number of precoding matrix subbands included in each subband, or a number of precoding matrix subbands included in each CQI subband.

In the wireless communication system, using a multi-antenna transmission technology may improve transmission efficiency for data, thereby improving system performance. It can be understood that, compared with the technology using a single antenna panel, using a plurality of antenna panels may support a larger number of antennas, to improve transmission efficiency for data. Further, using a plurality of distributed antenna panels may also effectively reduce an average transmission distance between the terminal and the base station, reduce an average path loss, and improve average received power. If the transmission phase between respective panels can be kept synchronized (because the superposition effect of the same phase is better), received power may be further increased, thereby improving system performance. For example, if data transmitted by respective panels may arrive at the terminal with the same phase after experiencing different radio channels, the power of signal reception may be increased, thereby improving system performance.

However, in a scheme where the network side uses a plurality of panels to transmit data, the phase synchronization error of signals from respective panels when arriving at a receiving end is large, seriously affecting the performance of multi-panel data transmission. Therefore, how to improve the phase synchronization accuracy of signals from respective panels at the receiving end is an urgent problem to be solved in current wireless communication technologies and future wireless communication technologies.

To address the above technical problem, the embodiments of the present disclosure provide an information reporting method, where the idea is: a first communication node may determine channel state information according to received first configuration information, and send the channel state channel to a second communication node. The channel state information includes a precoding matrix, and the precoding matrix is determined according to a first matrix and a second matrix. It can be understood that, since the precoding matrix is determined by the first matrix and the second matrix, and the first matrix is determined according to a first reference signal resource, and the second matrix is determined according to a second reference signal resource, therefore, the precoding matrix can reflect the correlation between the first reference signal resource and the second reference signal resource; thus, the second communication node, when transmitting signals according to the precoding matrix, may improve the phase synchronization accuracy of signals carried on the two reference signal resources upon arriving at the first communication node.

The technical solutions provided in the embodiments of the present disclosure may be applied to various mobile communication networks, for example, NR mobile communication networks, LTE mobile communication networks, future mobile communication networks, or a plurality of communication fusion systems, etc., which are not limited to the embodiments of the present disclosure.

A network architecture of a mobile communication network (including but not limited to 3G, 4G, 5G and future mobile communication networks) in the embodiments of the present disclosure may include at least a first communication node and a second communication node, where the first communication node and the second communication node communicate by a radio channel.

Exemplarily, the first communication node may be a terminal, and the second communication node may be a base station, where the base station and the terminal communicate by a radio channel; or, the first communication node is a terminal, and the second communication node is a wireless router, where the wireless router and the terminal communicate by a radio channel; or, the first communication node is a first base station, and the second communication node is a second base station, where the first base station and the second base station communicate by a radio channel; or, the first communication node is a first terminal, and the second communication node is a second terminal, where the first terminal and the second terminal communicate by a radio channel; or, the first communication node is a relay, and the second communication node is a base station, where the base station and the relay communicate by a radio channel; or, the first communication node is a terminal, and the second communication node is a relay, where the relay and the terminal communicate by a radio channel; or, the first communication node is a first relay, and the second communication node is a second relay, where the first relay and the second relay communicate by a radio channel; or, the first communication node is a base station, and the second communication node is a satellite, where the satellite and the base station communicate by a radio channel; or, the first communication node is a satellite, and the second communication node is a base station, where the base station and the satellite communicate by a radio channel; or, the first communication node is a terminal, and the second communication node is a satellite, where the satellite and the terminal communicate by a radio channel; or, the first communication node is a satellite, and the second communication node is a terminal, where the terminal and the satellite communicate by a radio channel; or, the first communication node is a ground device, and the second communication node is an aircraft, where the aircraft and the ground device communicate by a radio channel; or, the first communication node is a first aircraft, and the second communication node is a second aircraft, where the first aircraft and the second aircraft communicate by a radio channel.

It should be understood that, in this example, in a downlink, the first communication node may be a network side device (for example, including but not limited to a base station), and the second communication node may be a terminal side device (for example, including but not limited to a terminal device). Of course, in an uplink, the first communication node may also be a terminal side device, and the second communication node may also be a network side device. In a case where two communication nodes are device-to-device communication, both the first communication node and the second communication node may be base stations or terminal devices.

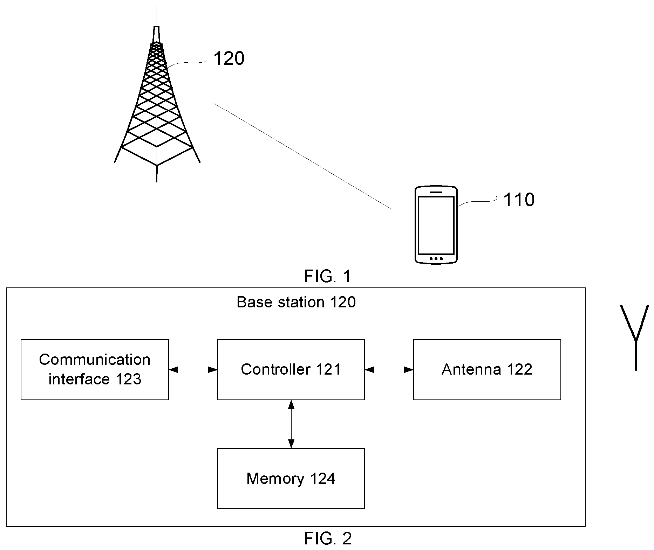

Exemplarily, taking an example in which the first communication node is a terminal device and the second communication node is a base station, FIG. 1 shows an architecture schematic diagram of a mobile communication network, provided by the embodiments of the present disclosure. As shown in FIG. 1, the mobile communication network includes a terminal device 110 and a base station 120. The terminal device 110 and the base station 120 communicate by a radio channel.

In some embodiments, the terminal device 110 may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal device may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal device sometimes may be referred to as a user, a UE, an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

In some embodiments, the terminal device 110 may receive a reference signal sent from the base station 120, and measure the reference signal, to obtain channel state information.

In some embodiments, the base station 120 is configured to transmit and receive electromagnetic waves.

In some embodiments, the base station 120 may be a base station or an evolutional base station (evolutional node B, eNB or eNodeB) in long term evolution (LTE), long term evolution advanced (LTEA), a base station device in a 5G network, or a base station in a future communication system, etc., and the base station may include various network side devices such as macro base stations, micro base stations, home base stations, wireless remote, reconfigurable intelligent surfaces (RISs), routers, wireless fidelity (WIFI) devices, etc.

In some embodiments, as shown in FIG. 2, the base station 120 includes: a controller 121 and an antenna 122. The controller 121 is configured to manage a wireless communication interface and a radio channel. The antenna 122 is configured to transmit and receive electromagnetic waves. Exemplarily, the antenna 122 may transmit the electromagnetic waves according to control by the controller 121.

In some embodiments, the antenna 122 may include: a plurality of antenna panels (exemplarily, the plurality of antenna panels may be distributed antenna panels), and each antenna panel includes a plurality of antenna elements. The antenna panel may be used to transmit and receive signals. Exemplarily, in a transmission mode, the antenna panel may serve as a transmit antenna panel for transmitting signals; in a reception mode, the antenna panel may serve as a receiving antenna panel for receiving signals.

In some embodiments, the base station 120 may further include a communication interface 123, configured to perform information interaction with other devices.

In some embodiments, the base station 120 may further include a memory 124, configured to store data.

Exemplarily, the memory 124 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

It should be noted that, FIG. 1 is only an exemplary framework diagram, and a number of devices and names of the various devices included in FIG. 1 are not limited, and in addition to the devices shown in FIG. 1, the mobile communication network may also include other devices, such as a core network device.

It can be understood that, the application scenarios of the embodiments of the present disclosure are not limited thereto. The system architecture and traffic scenarios described in the embodiments of the present disclosure are intended to illustrate the technical solutions of the embodiments of the present disclosure more clearly, and do not limit the technical solutions provided in the embodiments of the present disclosure. Those ordinary skilled in the art can know that, with the evolution of the network architecture and the emergence of new traffic scenarios, the technical solutions provided in the embodiments of the present disclosure are also applicable to similar technical problems.

An exemplary introduction is provided below for the information reporting method provided in the embodiments of the present disclosure.

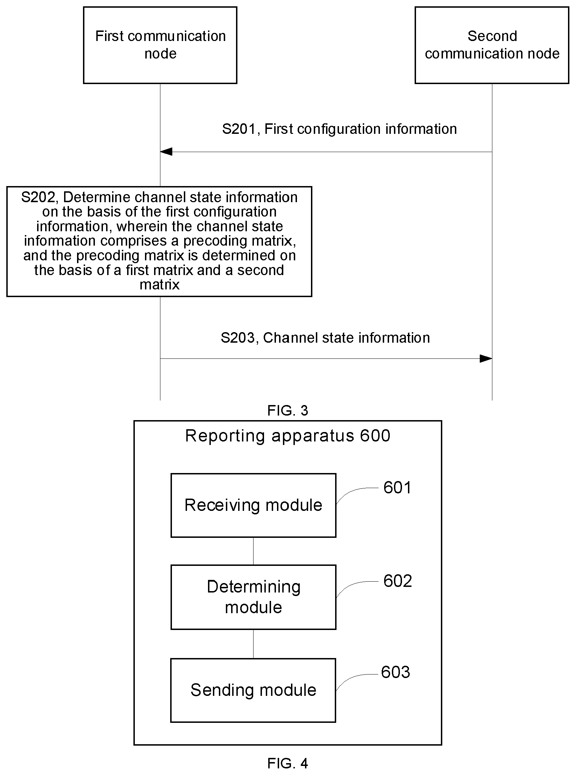

The present disclosure provides an information reporting method, as shown in FIG. 3, and the method includes: S201 to S203.

In S201, a second communication node sends first configuration information to a first communication node. Correspondingly, the first communication node receives the first configuration information sent from the second communication node.

The first configuration information is used for configuring a plurality of reference signal resources. Exemplarily, the first configuration information may include information of the plurality of reference signal resources, for example, the first configuration information may include at least one of: index numbers of the plurality of reference signal resources, time-domain locations of the plurality of reference signal resources, frequency-domain locations of the plurality of reference signal resources, or densities of the plurality of reference signal resources.

The reference signal resource refers to a time-domain resource and a frequency-domain resource used for transmitting a reference signal.

In some embodiments, the plurality of reference signal resources include at least a first reference signal resource and a second reference signal resource. The first reference signal resource corresponds to a first transmit antenna panel of the second communication node, and the second reference signal resource corresponds to a second transmit antenna panel of the second communication node.

In some embodiments, a first matrix includes M layers, and a second matrix includes N layers, where M is an integer greater than or equal to 1; N is an integer greater than or equal to 1. Exemplarily, a layer may correspond to a column or a plurality of columns of the first matrix.

As a possible implementation, M layers of the first matrix may be determined based on the first reference signal resource. N layers of the second matrix may be determined based on the second reference signal resource.

Each layer among the M layers of the first matrix is respectively used to characterize a relationship of each layer among transmit antenna ports corresponding to a channel experienced by a reference signal carried on the first reference signal resource. Each layer among the N layers of the second matrix is respectively used to characterize a relationship of each layer among transmit antenna ports corresponding to a channel experienced by a reference signal carried on the second reference signal resource.

In S202, the first communication node determines channel state information according to the first configuration information.

In some embodiments, the first communication node measures a reference signal carried on a reference signal resource according to the first configuration information, thereby generating the channel state information based on a measurement result.

The channel state information includes a precoding matrix. The precoding matrix may be used for pre-processing data at a sending end.

The above precoding matrix is determined according to the first matrix and the second matrix. The first matrix is determined according to the first reference signal resource, that is, the first matrix is determined based on measurement performed by the first communication node, on the reference signal carried on the first reference signal resource; the second matrix is determined according to the second reference signal resource, that is, the second matrix is determined based on measurement performed by the first communication node, on the reference signal carried on the second reference signal resource.

In some embodiments, the precoding matrix may be determined according to a linear combination of the first matrix and the second matrix.

It can be understood that, since the precoding matrix is determined by the linear combination of the first matrix and the second matrix, a phase difference between a transmit antenna panel corresponding to the first matrix and a transmit antenna panel corresponding to the second matrix may be compensated by the form of the linear combination, thereby improving phase synchronization accuracy of signals respectively transmitted by the two transmit panels when arriving at the first communication node.

As a possible implementation, the precoding matrix may be constituted by the first matrix, a coefficient of the first matrix, the second matrix, and a coefficient of the second matrix.

Exemplarily, assuming that the first matrix is represented as V₁, and the second matrix is represented as V_{2,} then the precoding matrix W may be represented as W=a₁V₁+a₂V₂, where a₁ is the coefficient of the first matrix, and a₂ is the coefficient of the second matrix.

As another possible implementation, the linear combination of the first matrix and the second matrix is taken as an input parameter of a first function, and an output parameter of the first function is taken as the precoding matrix.

Exemplarily, the precoding matrix W may be represented as W=F₁(a₁V₁+a₂V₂). F₁ is the first function.

In some embodiments, the coefficient of the first matrix in the linear combination is 1.

Exemplarily, assume that the coefficient a1 of the first matrix in the linear combination a₁V₁+a₂V₂ is 1, then the linear combination may be represented as V₁+a₂V₂.

It can be understood that, by setting the coefficient of the first matrix in the linear combination to 1, phase synchronization of the signal transmitted by the transmit antenna panel corresponding to the first reference signal resource and the signal transmitted by the transmit antenna panel corresponding to the second reference signal resource when arriving at the first node may be achieved by only adjusting the coefficient a₂ of the second matrix. Thus, compared with simultaneously adjusting coefficients of the two matrices, adjustment difficulty may be reduced.

Simultaneously, in a case where the coefficient of the first matrix is 1 by default, the first communication node, when reporting the channel state information, may only report the coefficient a2 of the second matrix, without reporting the coefficient a1 of the first matrix, which can save resource overhead.

In some embodiments, the coefficient of the second matrix in the linear combination may be determined by following manners.

As a possible implementation, the coefficient of the second matrix in the linear combination is determined based on the first reference signal resource and the second reference signal resource.

Exemplarily, the coefficient of the second matrix in the linear combination is determined based on a difference between a channel characteristic corresponding to the first reference signal resource and a channel characteristic corresponding to the second reference signal resource.

It should be noted that, the channel characteristic corresponding to the reference signal resource refers to a characteristic of a channel experienced by a reference signal carried on the reference signal resource. For example, the channel characteristic may include a phase of the channel, a latency of the channel, etc.

The channel characteristic corresponding to the first reference signal resource may be obtained by measuring the reference signal carried on the first reference signal resource; the channel characteristic corresponding to the second reference signal resource may be obtained by measuring the reference signal carried on the second reference signal resource.

It can be understood that, the coefficient of the second matrix may be determined based on two reference signal resources (that is, the first reference signal resource and the second reference signal resource), so that the coefficient of the second matrix may reflect a correlation between channels experienced by reference signals carried on the two reference signal resources (or it may also be described as that: the coefficient of the second matrix may also reflect a correlation between a channel experienced by a reference signal carried on the second reference signal resource and a channel experienced by a reference signal carried on the first reference signal resource; or, the coefficient of the second matrix may reflect a correlation between a channel from a first transmit antenna panel of the second communication node to the first communication node and a channel from a second transmit antenna panel of the second communication node to the first communication node; or, the coefficient of the second matrix may reflect a correlation between a channel from a first transmit antenna combination of the second communication node to the first communication node and a channel from a second transmit antenna combination of the second communication node to the first communication node; or, the coefficient of the second matrix may reflect a correlation between a channel from a transmit antenna corresponding to the first reference signal resource to the first communication node and a channel from a transmit antenna corresponding to the second reference signal resource to the first communication node. ).

The correlation between channels may be a difference in channel characteristics, for example, a phase difference.

Therefore, by using the precoding matrix determined based on the coefficient of the second matrix to adjust data at the sending end, phase synchronization may be achieved between the signal transmitted by the transmit antenna panel corresponding to the first reference signal resource and the signal transmitted by the transmit antenna panel corresponding to the second reference signal resource when arriving at the first communication node.

As another possible implementation, the plurality of reference signal resources further include a third reference signal resource, where a first port of the third reference signal resource is the same as a first port of the first reference signal resource, and a second port of the third reference signal resource is the same as a first port of the second reference signal resource; and the coefficient of the second matrix in the linear combination is determined based on the third reference signal resource.

A port of the above reference signal resource refers to a port of a transmit antenna of the reference signal carried on the reference signal resource. Exemplarily, the first port of the third reference signal resource refers to a port of a first transmit antenna of the reference signal carried on the third reference signal resource; a second port of the third reference signal resource refers to a port of a second transmit antenna of the reference signal carried on the third reference signal resource; a first port of the first reference signal resource refers to a port of a first transmit antenna of the reference signal carried on the first reference signal resource; a first port of the second reference signal resource refers to a port of a first transmit antenna of the reference signal carried on the second reference signal resource.

Exemplarily, the coefficient of the second matrix may be determined by measuring a reference signal of the first port of the third reference signal resource and a reference signal of the second port of the third reference signal resource.

It can be understood that, since the coefficient of the second matrix is determined based on measurement of the reference signal of the first port of the third reference signal resource and the reference signal of the second port of the third reference signal resource, and the first port and the second port of the third reference signal resource respectively correspond to the first port of the first reference signal resource and the first port of the second reference signal resource, therefore, the coefficient of the second matrix may reflect a correlation between the channel from the transmit antenna panel of the first reference signal resource to the first communication node and the channel from the transmit antenna corresponding to the second reference signal resource to the first communication node, so that the coefficient of the second matrix may reflect the difference between channels experienced by reference signals carried on the two reference signal resources. Therefore, Therefore, by using the precoding matrix determined based on the coefficient of the second matrix to adjust data at the sending end, phase synchronization may be achieved between the signal transmitted by the transmit antenna panel corresponding to the first reference signal resource and the signal transmitted by the transmit antenna panel corresponding to the second reference signal resource when arriving at the first communication node.

In some embodiments, the precoding matrix is a plurality of precoding matrices, and a precoding matrix corresponds to a subband in a reporting band.

It may be understood that, the reporting band (i.e., a channel state information reporting band) may include a plurality of subbands, each subband corresponds to a precoding matrix, and the precoding matrix corresponding to each subband is determined by a linear combination of a first matrix and a second matrix of the each subband.

Exemplarily, manners for determining the coefficient of the second matrix of each subband in the reporting band include the following.

Manner 1: a coefficient of the second matrix for each subband in the reporting band is determined based on a coefficient of the second matrix for the first subband in the reporting band.

Exemplarily, the coefficient of the second matrix for each subband in the reporting band may be equal to the coefficient of the second matrix of the first subband in the reporting band.

Exemplarily, the coefficient of the second matrix for the first subband in the reporting band may be used as an input parameter of a function, and an output parameter of the function may be used as a coefficient of the second matrix for each subband in the reporting band.

It may be understood that, resource overhead for reporting is saved by determining the coefficient of the second matrix for each subband in the reporting band according to the coefficient of the second matrix for the first subband in the reporting band, but this manner cannot reflect a variation trend of the correlation between channels experienced by reference signals carried on two reference signal resources in frequency domain. Exemplarily, the variation trend of the correlation between the channels experienced by the reference signals carried on the two reference signal resources in the frequency domain may be that: a variation in the phase difference between reference signals carried on the two reference signal resources on different subbands of the reporting band. The above variation trend in the frequency domain may include: increasing, decreasing, or unchanged.

Manner 2: the coefficient of the second matrix for each subband within the reporting band is respectively equal to an actual measurement value of the coefficient of the second matrix for each subband within the reporting band measured by the first communication node.

Exemplarily, assuming that the reporting band includes subband 1, subband 2, and subband 3, and an actual measurement value of a coefficient of a second matrix for the subband 1 measured by the first communication node is a1, an actual measurement value of a coefficient of a second matrix for the subband 2 measured by the first communication node is a2, and an actual measurement value of a coefficient of a second matrix for the subband 3 measured by the first communication node is a3; then, a coefficient of a second matrix for the subband 1 in the reporting band reported by the first communication node to the second communication node is a1, a coefficient of a second matrix for the subband 2 is a2, and a coefficient of a second matrix for the subband 3 is a3.

It may be understood that, the first communication node determines the coefficient of the second matrix for each subband in the reporting band according to the measurement result, and reports to the second communication node; where in the channel state information reported by the first communication node to the second communication node, the coefficient of the second matrix corresponding to the precoding matrix for each subband is equal to the actual measurement value of the coefficient of the second matrix for each subband in the reporting band measured by the first communication node. Thus, the coefficient of the second matrix for each subband in the reporting band determined according to Manner 2 can reflect the variation trend of the correlation between the channels experienced by the reference signals carried on the two reference signal resources in the frequency domain, but resource overhead for reporting the coefficient of the second matrix for each subband in the reporting band is relatively large.

Manner 3: the coefficient of the second matrix for each subband in the reporting band is determined based on the coefficient of the second matrix for the first subband in the reporting band and the coefficient of the second matrix for the second subband in the reporting band.

Exemplarily, a coefficient of a second matrix for each subband in the reporting band is obtained by using an interpolation manner based on the coefficient of the second matrix for the first subband and the coefficient of the second matrix for the second subband.

Exemplarily, the coefficient of the second matrix for the first subband and the coefficient of the second matrix for the second subband are used as input parameters of a function, and an output parameter of the function is used as the coefficient of the second matrix for each subband in the reporting band.

It may be understood that, since the variation trend of the correlation between the channels experienced by the reference signals carried on the two reference signal resources in the frequency domain is mainly generated by a latency difference between the reference signals carried on the two reference signal resources arriving at the first communication node; therefore, the coefficient of the second matrix for the first subband and the coefficient of the second matrix for the second subband jointed together can reflect the variation trend of the correlation between the channels experienced by the reference signals carried on the two reference signal resources in the frequency domain.

Therefore, based on the determination manner provided in the above Manner 3, the first communication node only needs to report the coefficient of the second matrix for the first subband and the coefficient of the second matrix for the second subband to the second communication node, without reporting coefficients of second matrices of other subbands, thus, resource overhead for reporting may be saved.

Manner 4: the coefficient of the second matrix for each subband in the reporting band is determined based on the coefficient of the second matrix for the first subband in the reporting band and a first latency.

Exemplarily, the coefficient of the second matrix for the first subband and the first latency may be used as input parameters of a function, and an output parameter of the function may be used as the coefficient of the second matrix for each subband in the reporting band.

In some embodiments, the first latency is determined based on the first reference signal resource and the second reference signal resource.

As a possible implementation, the first latency may be a time difference between a time when a reference signal carried on the first reference signal resource arrives at the first communication node and a time when a reference signal carried on the second reference signal resource arrives at the first communication node. Exemplarily, assuming that the time when the reference signal carried on the first reference signal resource arrives at the first communication node is t1, and the time when the reference signal carried on the second reference signal resource arrives at the first communication node is t2, then the first latency may be |t1-t2|.

As another possible implementation, the first latency is a function of a time when a reference signal carried on the first reference signal resource arrives at the first communication node and a time when a reference signal carried on the second reference signal resource arrives at the first communication node, for example, the first delay is a function of a difference.

It may be understood that, since the variation trend of the correlation between the channels experienced by the reference signals carried on two reference signal resources in frequency domain is mainly generated by a latency difference between the reference signals carried on the two reference signal resources arriving at the first communication node, therefore, the coefficient of the second matrix for each subband in the reporting band determined based on the coefficient of the second matrix for the first subband and the first delay may reflect the variation trend of the correlation between the channels experienced by the reference signals carried on the two reference signal resources in the frequency domain.

Manner 5: the coefficient of the second matrix for each subband in the reporting band is determined based on the coefficient of the second matrix for the first subband in the reporting band and a first vector.

Exemplarily, the coefficient of the second matrix for the first subband and the first vector may be used as input parameters of a function, and an output parameter of the function may be used as the coefficient of the second matrix for each subband in the reporting band.

In some embodiments, the first vector is determined based on the first reference signal resource and the second reference signal resource, and various elements in the first vector respectively correspond to various subbands in the reporting band.

As a possible implementation, according to the measurement of the reference signal carried on the first reference signal resource and the measurement of the reference signal carried on the second reference signal resource by the first communication node, the variation trend of the correlation between the channels experienced by the reference signals carried on the two reference signal resources in frequency domain is determined, and then a vector that may reflect the variation trend of the correlation between the channels experienced by the reference signals carried on the two reference signal resources in the frequency domain is selected from a candidate vector set as the first vector.

Exemplarily, assuming that the reporting band includes subband 1, subband 2, and subband 3, and a phase difference between the reference signals carried on the two reference signal resources on the subband 1 is π/6, on the subband 2 is 2π/6, and on the subband 3 is 3π/6; assuming that the candidate vector set is {π/12, 2π/12, 3π/12, π, π/7, π/8}, then the first vector selected from the candidate vector set is {π/12, 2π/12, 3π/12}, and the first vector may reflect the variation trend of the correlation between the channels experienced by the reference signals carried on the two reference signal resources in the frequency domain.

The above is an introduction to manners for determining the coefficient of the second matrix for each subband in the reporting band, for ease of understanding, and the first subband and the second subband involved in the above determination manners are introduced below.

Exemplarily, the first subband and the second subband may be determined in the following modes.

Mode 1: the first subband is a subband with a lowest frequency in the reporting band; and the second subband is a subband with a highest frequency in the reporting band.

It may be understood that, since the coefficient of the second matrix for the first subband and the coefficient of the second matrix for the second subband measured by the first communication node may have certain errors, then when determining the coefficient of the second matrix for each subband in the reporting band according to the coefficient of the second matrix for the first subband and the coefficient of the second matrix for the second subband, accumulated errors may be generated. Since the accumulated error of the coefficient of the second matrix for each subband in the reporting band decreases as the frequency-domain interval between the first subband and the second subband increases, the lowest frequency subband in the reporting band may be used as the first subband, and the highest frequency subband may be used as the second subband, to reduce the accumulated error of the coefficient of the second matrix for each subband in the reporting band.

Mode 2: the first subband is the lowest frequency subband in the reporting band; in a case where a first constraint condition is satisfied, the second subband is the subband with a largest frequency interval distance from the first subband in the reporting band.

The first constraint condition is that a difference between the phase of the coefficient of the second matrix for the second subband and the phase of the coefficient of the second matrix for the first subband is less than or equal to a preset threshold. Exemplarily, the preset threshold may be 2π.

Exemplarily, the first subband is the lowest frequency subband in the reporting band, the second subband is the subband with a largest frequency interval distance from the first subband in the reporting band, and the difference between the phase of the coefficient of the second matrix for the second subband and the phase of the coefficient of the second matrix for the first subband is less than or equal to 2π.

It may be understood that, since the phase period of a complex number is 2π (i.e., numbers with a phase difference is 2π are equal), in the mode of determining the coefficient of the second matrix for each subband within the reporting band according to the coefficient of the second matrix for the first subband and the coefficient of the second matrix for the second subband, an error in the coefficient of the second matrix for each subband within the reporting band may be caused due to inconsistency in the periods to which the phases of the coefficient of the second matrix for the first subband and the coefficient of the second matrix for the second subband belong. To avoid this error, the first communication node may use the following approaches. Approach 1, the first communication node reports the period to which the phase of the coefficient of the second matrix for the first subband belongs and the period to which the phase of the coefficient of the second matrix for the second subband belongs, or reports a difference between the period to which the phase of the coefficient of the second matrix for the first subband belongs and the period to which the phase of the coefficient of the second matrix for the second subband belongs, to determine whether the periods are consistent and perform adjustment in a timely manner when they are inconsistent. Approach 2, constrain that a difference between the phase of the coefficient of the second matrix for the second subband and the phase of the coefficient of the second matrix for the first subband does not exceed a preset threshold (for example, 2π).

It may be understood that, through the above Mode 2, the accumulated error of the coefficient of the second matrix for each subband in the reporting band may be reduced, and the error in the coefficient of the second matrix for each subband within the reporting band caused by inconsistency in the periods to which the phases of the coefficient of the second matrix for the first subband and the coefficient of the second matrix for the second subband belong may be avoided. Meanwhile, in a case where the lowest frequency subband is used as the first subband by default, there is no need to report the location of the first subband or the index number of the first subband to the second communication node, which can save resource overhead.

Mode 3: the first subband is the subband with highest power in the reporting band; in a case where a first constraint condition is satisfied, the second subband is the subband with a largest frequency interval distance from the first subband in the reporting band.

The first constraint condition is that a difference between the phase of the coefficient of the second matrix for the second subband and the phase of the coefficient of the second matrix for the first subband is less than or equal to a preset threshold. Exemplarily, the preset threshold may be 2π.

Exemplarily, the first subband is the subband with the highest power in the reporting band, the second subband is the subband with a largest frequency interval distance from the first subband in the reporting band, and the difference between the phase of the coefficient of the second matrix for the second subband and the phase of the coefficient of the second matrix for the first subband is less than or equal to 2π.

Exemplarily, for the description of the first constraint condition, reference may be made to the above Mode 2, which is not repeated herein.

It may be understood that, the above Mode 3 provides another implementation for determining the first subband and the second subband; through the above Mode 3, by using the subband with the highest power as the first subband, the accumulated error of the coefficient of the second matrix for each subband in the reporting band may be reduced; meanwhile, by setting the first constraint condition, the error in the coefficient of the second matrix for each subband within the reporting band caused by inconsistency in the periods to which the phases of the coefficient of the second matrix for the first subband and the coefficient of the second matrix for the second subband belong may be avoided.

In some embodiments, in a case where the first matrix includes M layers and the second matrix includes N layers, the channel state information further includes: a layer correspondence between the M layers of the first matrix and the N layers of the second matrix.

Exemplarily, the above layer correspondence refers to a linear combination of an i-th layer among the M layers and a j-th layer among the N layers to form a layer in the precoding matrix. In this way, it can be avoided that the phase difference is large when the signal transmitted by the transmit antenna panel corresponding to the first reference signal resource and the signal transmitted by the transmit antenna panel corresponding to the second reference signal resource arrive at the first communication node due to inter-layer mismatch.

As a possible implementation, the layer correspondence between the M layers of the first matrix and the N layers of the second matrix may be represented as: reporting a layer sequential number of the first matrix and a layer sequential number of the second matrix corresponding to a layer sequential number according to the layer sequential number of the precoding matrix. The layer sequential number refers to an index number of a layer in a matrix.

Exemplarily, assume that the precoding matrix includes 3 layers, where a first layer of the precoding matrix includes a linear combination of an M1-th layer of the first matrix and an N3-th layer of the second matrix; a second layer of the precoding matrix includes a linear combination of an M2-th layer of the first matrix and an N1-th layer of the second matrix; and a third layer of the precoding matrix includes a linear combination of an M3-th layer of the first matrix and an N2-th layer of the second matrix.

As another possible implementation, the layer correspondence between the M layers of the first matrix and the N layers of the second matrix may also be represented as: reporting a layer sequential number of the first matrix and a layer sequential number of the second matrix that match each other according to a matching relationship.

Exemplarily, assume that an M1-th layer of the first matrix matches an N3-th layer of the second matrix, then a report is generated for the M1-th layer of the first matrix and the N3-th layer of the second matrix; assume that an M2-th layer of the first matrix matches an N1-th layer of the second matrix, then a report is generated for the M2-th layer of the first matrix and the N1-th layer of the second matrix; assume that an M3-th layer of the first matrix matches an N2-th layer of the second matrix, then a report is generated for the M3-th layer of the first matrix and the N2-th layer of the second matrix.

In S203, the first communication node reports the channel state information to the second communication node. Correspondingly, the second communication node receives the channel state information reported by the first communication node.

In some embodiments, the second communication node may determine a data transmission strategy based on the received channel state information, to improve data transmission efficiency.

It may be understood that, based on the information reporting method provided by the embodiments of the present disclosure, the first communication node may determine channel state information according to received first configuration information, and send the channel state channel to the second communication node. The channel state information includes a precoding matrix, and the precoding matrix is determined according to a first matrix and a second matrix. It can be understood that, since the precoding matrix is determined by the first matrix and the second matrix, and the first matrix is determined according to a first reference signal resource, and the second matrix is determined according to a second reference signal resource, therefore, the precoding matrix may reflect the correlation between the first reference signal resource and the second reference signal resource; thus, the second communication node, when transmitting signals according to the precoding matrix, may improve the phase synchronization accuracy of signals carried on the two reference signal resources when arriving at the first communication node.

The above introduces the solutions of the embodiments of the present disclosure mainly from the perspective of methods. It can be understood that, in order to implement the above functions, a reporting apparatus contains at least one of corresponding hardware structures or software modules for performing various functions. Those skilled in the art should easily realize that, in conjunction with the units and algorithm steps of various examples described in the embodiments disclosed herein, the embodiments of the present disclosure may be implemented in the form of hardware or a combination of hardware and computer software. Whether a certain function is performed by hardware or by computer software driving hardware, depends on the specific applications and design constraint conditions of the technical solution. Professional technicians may use different methods to implement the described functions for each specific application, but such implementation should not be considered beyond the scope of the embodiments of the present disclosure.

It can be understood that, in order to implement the above functions, a reporting apparatus contains corresponding hardware structures and/or software modules for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such implementation should not be considered beyond the scope of the present disclosure.

In the embodiments of the present disclosure, the reporting apparatus may be divided into functional modules according to the foregoing method embodiments, for example, may be divided in a way that each functional module corresponds to each function, or two or more functions are integrated into one functional module. The above-mentioned integrated module may be implemented in the form of hardware or may also be implemented in the form of software. It should be noted that the division of the modules in embodiments of the present disclosure is schematic, which is only a logical functional division, and there may be other divisions for in actual implementations. The example in which each functional module is divided corresponding to each function, is taken for explanation below.

FIG. 4 is a structural schematic diagram of a reporting apparatus, provided by the embodiments of the present disclosure; the reporting apparatus is applied to a first communication node and may perform the information reporting method provided by the above method embodiments. As shown in FIG. 4, the reporting apparatus 600 includes: a receiving module 601, a determining module 602, and a sending module 603.

The receiving module 601, is configured to receive first configuration information sent from a second communication node, where the first configuration information is used for configuring a plurality of reference signal resources, and the plurality of reference signal resources include at least a first reference signal resource and a second reference signal resource.

The determining module 602, is configured to determine channel state information according to the first configuration information, where the channel state information includes a precoding matrix, the precoding matrix is determined according to a first matrix and a second matrix, the first matrix is determined according to the first reference signal resource, and the second matrix is determined according to the second reference signal resource.

The sending module 603, is configured to report the channel state information to the second communication node.

In some embodiments, the first reference signal resource corresponds to a first transmit antenna panel of the second communication node, and the second reference signal resource corresponds to a second transmit antenna panel of the second communication node.

In some embodiments, the precoding matrix is determined according to a linear combination of the first matrix and the second matrix.

In some embodiments, a coefficient of the first matrix in the linear combination is 1.

In some embodiments, a coefficient of the second matrix in the linear combination is determined based on the first reference signal resource and the second reference signal resource.

In some embodiments, a coefficient of the second matrix in the linear combination is determined based on a difference between a channel characteristic corresponding to the first reference signal resource and a channel characteristic corresponding to the second reference signal resource.

In some embodiments, the plurality of reference signal resources further include a third reference signal resource, a first port of the third reference signal resource is the same as a first port of the first reference signal resource, and a second port of the third reference signal resource is the same as a first port of the second reference signal resource; and a coefficient of the second matrix in the linear combination is determined based on the third reference signal resource.

In some embodiments, the precoding matrix is a plurality of precoding matrices, and a precoding matrix corresponds to a subband in a reporting band.

In some embodiments, a manner of determining a coefficient of a second matrix for each subband in the reporting band includes one of:
a coefficient of the second matrix for each subband in the reporting band being determined based on a coefficient of a second matrix for a first subband in the reporting band;
a coefficient of the second matrix for each subband in the reporting band being determined based on a coefficient of a second matrix for a first subband in the reporting band and a first latency; where the first latency is determined based on the first reference signal resource and the second reference signal resource;
a coefficient of the second matrix for each subband in the reporting band being determined based on a coefficient of a second matrix for a first subband in the reporting band and a first vector; where the first vector is determined based on the first reference signal resource and the second reference signal resource, and each element in the first vector corresponds to each subband in the reporting band respectively;
a coefficient of the second matrix for each subband in the reporting band being determined based on a coefficient of a second matrix for a first subband in the reporting band and a coefficient of a second matrix for a second subband in the reporting band.

In some embodiments, the first subband is a subband with a lowest frequency in the reporting band; and the second subband is a subband with a highest frequency in the reporting band.

In some embodiments, the first subband is a subband with a lowest frequency in the reporting band; in a case where a first constraint condition is satisfied, the second subband is a subband with a largest frequency interval distance from the first subband in the reporting band; where the first constraint condition is that a difference between a phase of the coefficient of the second matrix for the second subband and a phase of the coefficient of the second matrix for the first subband is less than or equal to a preset threshold.

In some embodiments, the first subband is a subband with highest power in the reporting band; in a case where a first constraint condition is satisfied, the second subband is a subband with a largest frequency interval distance from the first subband in the reporting band; where the first constraint condition is that a difference between a phase of the coefficient of the second matrix for the second subband and a phase of the coefficient of the second matrix for the first subband is less than or equal to a preset threshold.

In some embodiments, the first matrix includes M layers, the second matrix includes N layers, and the channel state information further includes: a layer correspondence between the M layers of the first matrix and the N layers of the second matrix; the M is an integer greater than or equal to 1; and the N is an integer greater than or equal to 1.

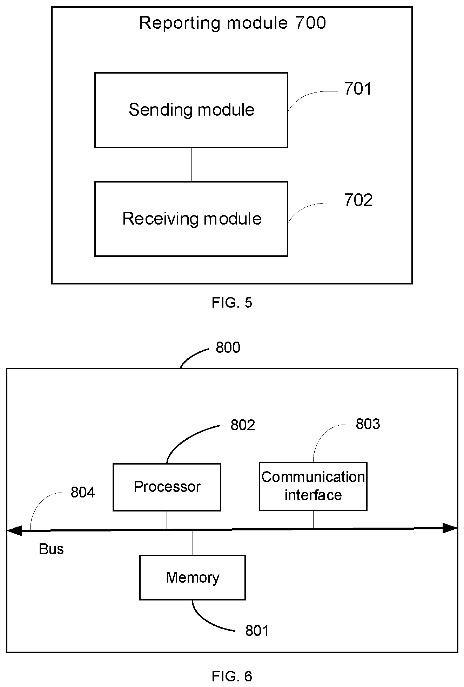

FIG. 5 is a structural schematic diagram of another reporting apparatus, provided by the embodiments of the present disclosure, the reporting apparatus is applied to a second communication node and may perform the information reporting method provided in the above method embodiments. As shown in FIG. 5, the reporting apparatus 700 includes: a sending module 701 and a receiving module 702.

The sending module 701, is configured to send first configuration information to a first communication node, where the first configuration information is used for configuring a plurality of reference signal resources, and the plurality of reference signal resources include at least a first reference signal resource and a second reference signal resource.

The receiving module 702, is configured to receive channel state information reported by the first communication node, where the channel state information includes a precoding matrix, the precoding matrix is determined according to a first matrix and a second matrix, the first matrix is determined according to the first reference signal resource, and the second matrix is determined according to the second reference signal resource.

In some embodiments, the first reference signal resource corresponds to a first transmit antenna panel of the second communication node, and the second reference signal resource corresponds to a second transmit antenna panel of the second communication node.

In some embodiments, the precoding matrix is determined according to a linear combination of the first matrix and the second matrix.

In some embodiments, a coefficient of the first matrix in the linear combination is 1.

In some embodiments, a coefficient of the second matrix in the linear combination is determined based on the first reference signal resource and the second reference signal resource.

In some embodiments, a coefficient of the second matrix in the linear combination is determined based on a difference between a channel characteristic corresponding to the first reference signal resource and a channel characteristic corresponding to the second reference signal resource.

In some embodiments, the plurality of reference signal resources further include a third reference signal resource, a first port of the third reference signal resource is the same as a first port of the first reference signal resource, and a second port of the third reference signal resource is the same as a first port of the second reference signal resource; and a coefficient of the second matrix in the linear combination is determined based on the third reference signal resource.

In some embodiments, the precoding matrix is a plurality of precoding matrices, and a precoding matrix corresponds to a subband in a reporting band.

In some embodiments, a manner of determining a coefficient of a second matrix for each subband in the reporting band includes one of:
a coefficient of the second matrix for each subband in the reporting band being determined based on a coefficient of a second matrix for a first subband in the reporting band;
a coefficient of the second matrix for each subband in the reporting band being determined based on a coefficient of a second matrix for a first subband in the reporting band and a first latency; where the first latency is determined based on the first reference signal resource and the second reference signal resource;
a coefficient of the second matrix for each subband in the reporting band being determined based on a coefficient of a second matrix for a first subband in the reporting band and a first vector; where the first vector is determined based on the first reference signal resource and the second reference signal resource, and each element in the first vector corresponds to each subband in the reporting band respectively;
a coefficient of the second matrix for each subband in the reporting band being determined based on a coefficient of a second matrix for a first subband in the reporting band and a coefficient of a second matrix for a second subband in the reporting band.

In some embodiments, the first subband is a subband with a lowest frequency in the reporting band; and the second subband is a subband with a highest frequency in the reporting band.

In some embodiments, the first subband is a subband with a lowest frequency in the reporting band; in a case where a first constraint condition is satisfied, the second subband is a subband with a largest frequency interval distance from the first subband in the reporting band; where the first constraint condition is that a difference between a phase of the coefficient of the second matrix for the second subband and a phase of the coefficient of the second matrix for the first subband is less than or equal to a preset threshold.

In some embodiments, the first subband is a subband with highest power in the reporting band; in a case where a first constraint condition is satisfied, the second subband is a subband with a largest frequency interval distance from the first subband in the reporting band; where the first constraint condition is that a difference between a phase of the coefficient of the second matrix for the second subband and a phase of the coefficient of the second matrix for the first subband is less than or equal to a preset threshold.

In some embodiments, the first matrix includes M layers, the second matrix includes N layers, and the channel state information further includes: a layer correspondence between the M layers of the first matrix and the N layers of the second matrix; where the M is an integer greater than or equal to 1; and the N is an integer greater than or equal to 1.

In a case where the functions of the above integrated modules are implemented in the form of hardware, the embodiments of the present disclosure provide a possible structure of the communication apparatus involved in the above embodiments. As shown in FIG. 6, the communication apparatus 800 includes a processor 802 and a bus 804. In some embodiments, the communication apparatus may further include a memory 801; in some embodiments, the communication apparatus 800 may further include a communication interface 803.

The processor 802 may implement or perform various exemplary logical blocks, modules and circuits described in conjunction with the embodiments of the present disclosure. The processor 802 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 802 may also be a combination that implements computing functions, for example, including a combination of one or more microprocessors, a combination of a digital signal processor (DSP) and a microprocessor, or the like.

The communication interface 803 is configured to connect with other devices via a communication network. The communication network may be an Ethernet, a radio access network, a wireless local area network (WLAN), or the like.

The memory 801 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 801 may exist independently of the processor 802, and the memory 801 may be connected to the processor 802 via the bus 804 and is used for storing instructions or program codes. The processor 502, when calling and executing the instructions or program codes stored in the memory 501, is capable of implementing the information reporting method provided in the embodiments of the present disclosure. As another possible implementation, the memory 801 may also be integrated with the processor 802.

The bus 804 may be an extended industry standard architecture (EISA) bus or the like. Buses 804 may be divided into address buses, data buses, control buses, and the like. For the convenience of representation, only one thick line is used in FIG. 6 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the information reporting method as described in any embodiment of the above-mentioned embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine readable storage medium" may include, but is not limited to, a wireless channel and various other media capable of storing, containing, and/or carrying instructions and/or data.

The embodiments of the present disclosure provide a computer program product containing instructions, and the computer program product, when running on a computer, enables the computer to perform the information reporting method as described in any embodiment of the above-mentioned embodiments.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure shall be determined by the protection scope of the claims.

## Claims

1. An information reporting method, **characterized in that** the method is applied to a first communication node, and the method comprises:
receiving first configuration information sent from a second communication node, wherein the first configuration information is used for configuring a plurality of reference signal resources, and the plurality of reference signal resources comprise at least a first reference signal resource and a second reference signal resource;
determining channel state information according to the first configuration information, wherein the channel state information comprises a precoding matrix, the precoding matrix is determined according to a first matrix and a second matrix, the first matrix is determined according to the first reference signal resource, and the second matrix is determined according to the second reference signal resource; and
reporting the channel state information to the second communication node.

2. The method according to claim 1, wherein the first reference signal resource corresponds to a first transmit antenna panel of the second communication node, and the second reference signal resource corresponds to a second transmit antenna panel of the second communication node.

3. The method according to claim 1, wherein the precoding matrix is determined according to a linear combination of the first matrix and the second matrix.

4. The method according to claim 3, wherein a coefficient of the first matrix in the linear combination is 1.

5. The method according to claim 3, wherein a coefficient of the second matrix in the linear combination is determined based on the first reference signal resource and the second reference signal resource.

6. The method according to claim 3, wherein a coefficient of the second matrix in the linear combination is determined based on a difference between a channel characteristic corresponding to the first reference signal resource and a channel characteristic corresponding to the second reference signal resource.

7. The method according to claim 3, wherein the plurality of reference signal resources further comprise a third reference signal resource, a first port of the third reference signal resource is the same as a first port of the first reference signal resource, and a second port of the third reference signal resource is the same as a first port of the second reference signal resource; and a coefficient of the second matrix in the linear combination is determined based on the third reference signal resource.

8. The method according to claim 1, wherein the precoding matrix is a plurality of precoding matrices, and a precoding matrix among the plurality of precoding matrices corresponds to a subband in a reporting band.

9. The method according to claim 8, wherein a manner of determining a coefficient of a second matrix for each subband in the reporting band comprises one of:
a coefficient of the second matrix for each subband in the reporting band being determined based on a coefficient of the second matrix for a first subband in the reporting band;
a coefficient of the second matrix for each subband in the reporting band being determined based on a coefficient of the second matrix for a first subband in the reporting band and a first latency; wherein the first latency is determined based on the first reference signal resource and the second reference signal resource;
a coefficient of the second matrix for each subband in the reporting band being determined based on a coefficient of the second matrix for a first subband in the reporting band and a first vector; wherein the first vector is determined based on the first reference signal resource and the second reference signal resource, and each element in the first vector corresponds to each subband in the reporting band respectively;
a coefficient of the second matrix for each subband in the reporting band being determined based on a coefficient of the second matrix for a first subband in the reporting band and a coefficient of the second matrix for a second subband in the reporting band.

10. The method according to claim 9, wherein the first subband is a subband with a lowest frequency in the reporting band; and the second subband is a subband with a highest frequency in the reporting band.

11. The method according to claim 9, wherein the first subband is a subband with a lowest frequency in the reporting band; in a case where a first constraint condition is satisfied, the second subband is a subband with a largest frequency interval distance from the first subband in the reporting band; wherein the first constraint condition is that a difference between a phase of the coefficient of the second matrix for the second subband and a phase of the coefficient of the second matrix for the first subband is less than or equal to a preset threshold.

12. The method according to claim 9, wherein the first subband is a subband with highest power in the reporting band; in a case where a first constraint condition is satisfied, the second subband is a subband with a largest frequency interval distance from the first subband in the reporting band; wherein the first constraint condition is that a difference between a phase of the coefficient of the second matrix for the second subband and a phase of the coefficient of the second matrix for the first subband is less than or equal to a preset threshold.

13. The method according to claim 1, wherein the first matrix comprises M layers, the second matrix comprises N layers, and the channel state information further comprises: a layer correspondence between the M layers of the first matrix and the N layers of the second matrix; the M is an integer greater than or equal to 1; and the N is an integer greater than or equal to 1.

14. An information reporting method, **characterized in that** the method is applied to a second communication node, and the method comprises:
sending first configuration information to a first communication node, wherein the first configuration information is used for configuring a plurality of reference signal resources, and the plurality of reference signal resources comprise at least a first reference signal resource and a second reference signal resource; and
receiving channel state information reported by the first communication node, wherein the channel state information comprises a precoding matrix, the precoding matrix is determined according to a first matrix and a second matrix, the first matrix is determined according to the first reference signal resource, and the second matrix is determined according to the second reference signal resource.

15. The method according to claim 14, wherein the first reference signal resource corresponds to a first transmit antenna panel of the second communication node, and the second reference signal resource corresponds to a second transmit antenna panel of the second communication node.

16. The method according to claim 14, wherein the precoding matrix is determined according to a linear combination of the first matrix and the second matrix.

17. The method according to claim 16, wherein a coefficient of the first matrix in the linear combination is 1.

18. The method according to claim 16, wherein a coefficient of the second matrix in the linear combination is determined based on the first reference signal resource and the second reference signal resource.

19. The method according to claim 16, wherein a coefficient of the second matrix in the linear combination is determined based on a difference between a channel characteristic corresponding to the first reference signal resource and a channel characteristic corresponding to the second reference signal resource.

20. The method according to claim 16, wherein the plurality of reference signal resources further comprise a third reference signal resource, a first port of the third reference signal resource is the same as a first port of the first reference signal resource, and a second port of the third reference signal resource is the same as a first port of the second reference signal resource; and a coefficient of the second matrix in the linear combination is determined based on the third reference signal resource.

21. The method according to claim 14, wherein the precoding matrix is a plurality of precoding matrices, and a precoding matrix among the plurality of precoding matrices corresponds to a subband in a reporting band.

22. The method according to claim 21, wherein a manner of determining a coefficient of a second matrix for each subband in the reporting band comprises one of:
a coefficient of the second matrix for each subband in the reporting band being determined based on a coefficient of the second matrix for a first subband in the reporting band;
a coefficient of the second matrix for each subband in the reporting band being determined based on a coefficient of the second matrix for a first subband in the reporting band and a first latency; wherein the first latency is determined based on the first reference signal resource and the second reference signal resource;
a coefficient of the second matrix for each subband in the reporting band being determined based on a coefficient of the second matrix for a first subband in the reporting band and a first vector; wherein the first vector is determined based on the first reference signal resource and the second reference signal resource, and each element in the first vector corresponds to each subband in the reporting band respectively;
a coefficient of the second matrix for each subband in the reporting band being determined based on a coefficient of the second matrix for a first subband in the reporting band and a coefficient of the second matrix for a second subband in the reporting band.

23. The method according to claim 22, wherein the first subband is a subband with a lowest frequency in the reporting band; and the second subband is a subband with a highest frequency in the reporting band.

24. The method according to claim 22, wherein the first subband is a subband with a lowest frequency in the reporting band; in a case where a first constraint condition is satisfied, the second subband is a subband with a largest frequency interval distance from the first subband in the reporting band; wherein the first constraint condition is that a difference between a phase of the coefficient of the second matrix for the second subband and a phase of the coefficient of the second matrix for the first subband is less than or equal to a preset threshold.

25. The method according to claim 22, wherein the first subband is a subband with highest power in the reporting band; in a case where a first constraint condition is satisfied, the second subband is a subband with a largest frequency interval distance from the first subband in the reporting band; wherein the first constraint condition is that a difference between a phase of the coefficient of the second matrix for the second subband and a phase of the coefficient of the second matrix for the first subband is less than or equal to a preset threshold.

26. The method according to claim 14, wherein the first matrix comprises M layers, the second matrix comprises N layers, and the channel state information further comprises: a layer correspondence between the M layers of the first matrix and the N layers of the second matrix; wherein the M is an integer greater than or equal to 1; and the N is an integer greater than or equal to 1.

27. A communication apparatus, **characterized by** comprising: a memory and a processor; wherein the memory and the processor are coupled; the memory is configured to store instructions executable by the processor; and the processor, upon executing the instructions, performs the information reporting method according to any one of claims 1 to 26.

28. A computer readable storage medium, **characterized in that** the computer readable storage medium has stored computer instructions thereon, and the computer instructions, upon being executed on an electronic device, enable the electronic device to perform the information reporting method according to any one of claims 1 to 26.
